# EUROPÄISCHE PATENTANMELDUNG

(11) **EP 0 675 216 A1**
(43) Veröffentlichungstag der Anmeldung: **04.10.1995**
(21) Anmeldenummer: 95100643.6
(22) Anmeldetag: 19.01.1995
(51) Int. Cl.: D01H 1/244, D01H 4/14, H02K 1/02, H02K 19/10, H02K 29/03

(54) **Einzelmotorischer Antrieb für einen OE-Spinnrotor**

(30) Priorität: 31.03.1994 DE 4411293
(71) Anmelder: Palitex Project-Company GmbH, D-47804 Krefeld (DE)
(72) Erfinder: Ballhausen, Ulrich, Dr., D-47802 Krefeld (DE); Spix, Guido, D-41564 Kaarst (DE); Backhaus, Klaus, D-52062 Aachen (DE); Schroers, Paul, D-41751 Viersen (DE)
(74) Vertreter: Sroka, Peter-Christian, Dipl.-Ing.

(57) **Zusammenfassung**

Ein einzelmotorischer Antrieb für einen OE-Spinnrotor mit einer den Spinnrotor (1) tragenden, in einem Gehäuse (3) drehbar gelagerten Welle (2), auf welcher der Rotor (7) eines Reluktanz-Motors drehfest angeordnet ist, dessen Stator (6) koaxial außerhalb des Rotors (7) fest am Gehäuse (3) angeordnet ist. Der Reluktanz-Motor ist als geschalteter Reluktanz-Motor ausgebildet, bei welchem mindestens der Rotor (7) aus einem ferromagnetischen Material mit einer Curie-Temperatur von mindestens 210°C, einer Sättigungs-Flußdichte von höchstens 0,8T, Verlusten bei 100 KHZ und 0,3T von höchstens 150 W/KG und einer Zugfestigkeit von mindestens 400N/mm² aufgebaut ist. Als Material kann ein amorphes Metall oder eine kristalline FeNi-, FiCo- oder FiNiCo-Legierung verwendet werden. Mit dem so ausgelegten Motor können sehr hohe Drehzahlen > 40000 U/min. bei minimalen Hysterese- und Wirbelstromverlusten erreicht werden.

## Beschreibung

Die Erfindung betrifft eine Antriebsvorrichtung für ein mit hoher Drehzahl rotierendes Bauteil, insbesondere für einen OE-Spinnrotor, mit einer das Bauteil tragenden, in einem Gehäuse drehbar gelagerten Welle, auf welcher der Rotor eines Reluktanz-Motors drehfest angeordnet ist, dessen Stator koaxial außerhalb des Rotors fest am Gehäuse angeordnet ist. Unter "hoher Drehzahl" soll dabei insbesondere eine Drehzahl > 40000 U/min verstanden werden.

Die klassische Antriebsvorrichtung für einen OE-Spinnrotor, wie sie auch heute noch viel Verwendung findet, ist der Tangentialriemenantrieb, wie er beispielsweise in der DE-OS 3 533 717 erwähnt und anhand eines Tangentialriemenantriebs mit Stützscheibenlagerung der den Spinnrotor tragenden Welle beschrieben ist.

Nachteile des Tangentialriemenantriebs sind der hohe Energieverbrauch durch die Walkarbeit, die Drehzahlabweichung von Spindel zur Spindel bedingt durch den Schlupf des Tangentialriemens, die zusätzliche Geräuscherzeugung, beispielsweise durch Antriebswellen, Spannrollen etc., der prinzipiell notwendige Platzbedarf zur Führung des Tangentialriemens und bei der Stützscheibenlagerung der den Spinnrotor tragenden Welle eine kostenaufwendige, hohe Anzahl von Lagerstellen sowie der einen hohen regelmäßigen Wartungsaufwand erfordernde Verschleiß der Stützscheiben-Beschichtung.

Aufgrund dieser Nachteile gibt es seit längerer Zeit bereits Bemühungen, den Tangentialriemenantrieb durch einzelmotorische Antriebe zu ersetzen.

Grundsätzlich werden an den Antriebsmotor einer Antriebsvorrichtung für einen OE-Spinnrotor folgende Anforderungen gestellt:
- hohe Drehzahlen
- stufenlose Drehzahlverstellung
- kein Drehzahlunterschied von Spindel zur Spindel
- hohe Prozeß-Sicherheit
- kurze Hochlaufzeiten
- sehr hoher Wirkungsgrad (Kühlung mittels Lüfter oft aus Platzgründen nicht möglich)
- weitgehende Wartungsfreiheit
- keine Funkenbildung durch Kommutator
- geringe Kosten für Motor und zugehörige Leistungselektronik.

Zur Lösung dieser Antriebsaufgabe sind bereits unterschiedliche Ansätze bekannt, bei denen sowohl Asynchron-Motoren, Synchron-Motoren wie auch Reluktanz-Motoren vorgeschlagen werden.

Antriebsvorrichtungen für OE-Spinnrotoren mit Asynchron-Motoren sind beispielsweise in DE-OS 2 644 749 und DE-OS 3 710 962 beschrieben.

Asynchron-Motoren haben die bekannten Vorteile, daß sie kostengünstig und weitgehend wartungsfrei sind und ein Anlauf an einer Versorgungsspannung variabler Frequenz ohne zusätzliche Hochfahrmaßnahmen direkt möglich ist. Bei ihrer Verwendung zum Antrieb eines OE-Spinnrotors treten jedoch einige schwerwiegende Nachteile auf.

Durch das Grundprinzip des Asynchron-Motors bedingt tritt bei ungeregeltem Betrieb ein lastabhängiger Schlupf von ca. 2 bis 3 Prozent auf. Der tatsächlich erzielbare Drehzahl-Gleichlauf von Spindel zur Spindel bei einer Vielstellenmaschine und damit die Garnqualität ist daher abhängig von der Fertigungstoleranz des Motors und von der momentanen Belastung beispielsweise Fasernanhäufungen, Flusen, etc.. Bei gesteuerten Asynchron-Motoren betragen üblicherweise die Drehzahlunterschiede von Motor zur Motor ca. 0,5 Prozent für eine vorgegebene Betriebsdrehzahl. Ohne aufwendige Regelung ist eine konstante Drehzahl nicht erzielbar.

Bei den für einen OE-Spinnrotor angestrebten, sehr hohen Drehzahlen (ca. 100.000 U/min.) treten durch die schlupfbedingten Rotorfrequenzen Verluste auf, die zu einem schlechten Wirkungsgrad führen.

Die durch die Rotorverluste erzeugte Wärme kann nur ungünstig über die Lager abgeleitet werden. Gegebenenfalls ist eine zusätzliche Kühlung erforderlich, die das System verteuert.

Drehsrom-Asynchron-Motoren erfordern eine aufwendige Leistungselektronik zur Ansteuerung. Die erforderlichen Frequenzumrichter sind 3-phasig und bipolar.

Zur Zeit marktgängige Frequenzumrichter besitzen üblicherweise maximale Ausgangsfrequenzen von 400 Hz bis 1000 Hz. Dies schränkt die Drehzahl von zweipoligen Drehstrom-Asynchronmaschinen auf 60.000 U/min. ein. Für den angestrebten Verwendungsfall müßten daher Sonderentwicklungen eingesetzt werden, die durch die Kombination einer aufwendigen Leistungselektronik mit geringen Stückzahlen die Kostenvorteile der Lösung mit Drehstrom-Asynchron-Motoren stark reduzieren.

Lösungsvorschläge mit permanenterregten Synchron-Motoren sind beispielsweise in DE-OS 2 235 686 und DE-OS 4 224 757 beschrieben.

Bei diesem Motorentyp können die Rotorverluste sowie der Drehzahlschlupf vermieden werden. Trotzdem treten hier ebenfalls Nachteile auf. Bedingt durch das verwendete Magnetmaterial (beispielsweise Samarium-Kobalt) und die Notwendigkeit einer fliehkraftsicheren Befestigung der Magnete am Rotor (siehe DE-OS 4 224 757) ist der Fertigungsaufwand hoch.

Die Leistungselektronik zur Ansteuerung ist ebenso aufwendig wie bei Drehstrom-Asynchron-Motoren. Wie bei Drehstrom-Asynchron-Motoren müssen als Frequenzumrichter kostenaufwendige Sonderentwicklungen eingesetzt werden, um die er forderlichen hohen Drehzahlen zu erzielen.

Die Verwendung von Reluktanz-Motoren wird in der DE-OS 2 235 686 erwähnt. Wie ein derartiger Reluktanz-Motor für die Anwendung bei derartigen hohen Drehzahlen beschaffen sein muß, wird nicht angegeben. In dem in dieser Druckschrift anhand eines Schaltbildes beschriebenen Ausführungsbeispiel werden Synchron-Motoren mit Permanenterregung eingesetzt.

Die Erfindung geht von der Erkenntnis aus, daß die an sich bekannten und in jüngerer Zeit weiterentwickelten geschalteten Reluktanz-Motoren (siehe z.B. "Elektronik Nr. 10, 1992, Seite 29 bis 31 und Nr. 26, 1992, Seite 72 bis 75") vom Grundprinzip her bereits einen großen Teil des eingangs erwähnten Anforderungsprofils erfüllen und damit zur Verwendung in einer Antriebsvorrichtung Für einen OE-Spinnrotor grundsätzlich geeignet sind.

Bei diesen Motoren kann eine stufenlose Drehzahlverstellung durch Änderung der Speisefrequenz erzielt werden. Bei bekannten und weitgehend konstanten Systemeigenschaften des Antriebs können alle Motoren des Vielstellensystems "Textilmaschine" an einer Einspeisung gesteuert betrieben werden. Hierbei treten keine Drehzahlunterschiede von Motor zur Motor auf, da der Motor schlupffrei arbeitet.

Ist eine größere Flexibilität bei der Drehzahlvorwahl der Einzelstelle erforderlich, kann für jeden Motor der Textilmaschine eine ausschließlich ihm zugeordnete Leistungselektronik vorgesehen werden. Vorteilhaft im Vergleich zu anderen Motortypen ist hierbei der geringe Aufwand an Leistungselektronik, da im Gegensatz zur bipolaren Bestromung von Drehfeldmotoren beim geschalteten Reluktanz-Motor nur eine unipolare Bestromung erforderlich ist. Bei einer derartigen Ausbildung kann der Motor ebenfalls gesteuert betrieben werden. Ohne großen Mehraufwand ist aber auch ein geregelter Betrieb möglich, um über einen weiten Bereich bei Schwankungen der Systemeigenschaften des Antriebssystems Prozeßsicherheit zu gewährleisten und die dynamischen Eigenschaften, insbesondere im Hinblick auf kurze Hochlaufzeiten, zu verbessern.

Weiterhin ergeben sich keine Drehzahlbeschränkungen bedingt durch die fliehkraftsichere Befestigung von Permanentmagneten, wie beim permanenterregten Synchron-Motor. Im Rotor des geschalteten Reluktanz-Motors tritt neben den Eisenverlusten keine zusätzliche Erwärmung durch Induktionsströme wie beim Asynchron-Motor auf, welche die maximale Drehzahl begrenzen und erhöhten Aufwand für Kühlung erfordern. Die maximale Drehzahl ist hauptsächlich abhängig vom verwendeten Lager. Das hohe Spitzendrehmoment erlaubt beim geschalteten Reluktanz-Motor kurze Hochlaufzeiten auf die Solldrehzahl. Weiterhin ist der Motor bürstenlos und erfüllt somit die Anforderungen "funkenfrei" und "weitgehend wartungsfrei". Der mechanische Aufbau des geschalteten Reluktanz-Motors ist außerordentlich einfach. Stator und Rotor bestehen aus Blech-Lamellen mit ausgeprägten Polen. Die Polwicklungen des Stators können einzeln vorgefertigt werden. Somit ist die Fertigung des Motors einfach und kostengünstig. Ebenso ist der Aufwand an Leistungselektronik zur Ansteuerung des geschalteten Reluktanz-Motors gering, da nur eine unipolare Bestromung der Wicklungen erforderlich ist im Gegensatz zur bipolaren Bestromung bei Drehfeldmotoren.

Wegen ihrer prinzipiell guten Eignung für hohe Drehzahlen wurden geschaltete Reluktanz-Motoren bereits für Hochgeschwindigkeits-Spindeln und Zentrifugen vorgeschlagen. Bei derartigen Anwendungen kann die bei hohen Drehzahlen, bedingt durch die Eisenverluste, auftretende hohe Motorerwärmung im Regelfall durch zusätzliche Kühlmaßnahmen auf einen zulässigen Wert reduziert werden. Abweichend hiervon bestehen bei der betrachteten Anwendung zum Antrieb eines OE-Rotors kaum Möglichkeiten für zusätzliche Kühlmaßnahmen. Desweiteren bestehen Bedenken bezüglich der Lärmentwicklung des Motors, die im allgemeinen höher ist als bei Drehfeld-Motoren, sowie bezüglich des Leistungsfaktors λ ( = Wirkleistung [W]/Scheinleistung [VA]), der üblicherweise schlechter als bei Induktions-Motoren vergleichbarer Leistung ist. Eine Anwendung in der Antriebsvorrichtung für einen OE-Spinnrotor ist bisher nicht bekannt.

Der Erfindung liegt die Aufgabe zugrunde, eine Antriebsvorrichtung mit den eingangs und im Oberbegriff des Patentanspruchs 1 angegebenen Merkmalen so auszubilden, daß sie die zuvor angegebenen Anforderungen an eine solche Antriebsvorrichtung erfüllt, wobei zusätzlich erreicht werden sollte, daß die Hysterese- und Wirbelstromverluste minimal bleiben sollten insbesondere deswegen, weil bei dem gedachten Einsatzzweck kaum Möglichkeiten für zusätzliche Kühlungsmaßnahmen bestehen. Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den Unteransprüchen beschrieben.

Die Erfindung geht von dem Grundgedanken aus, daß der an sich bekannte geschaltete Reluktanz-Motor zur Anwendung in einer Antriebsvorrichtung für einen OE-Spinnrotor dann gut geeignet ist, wenn es gelingt, die bedingt durch die Eisenverluste auftretende Motorerwärmung derart zu reduzieren, daß ein Betrieb ohne zusätzliche Kühlmaßnahmen möglich wird und zusätzlich Verbesserungen der Motoreigenschaften, insbesondere bezüglich der Lärmentwicklung und des Leistungsfaktors, erzielt werden können.

Bei geblechten ferromagnetischen Materialien nehmen die Eisenverluste wenigstens quadratisch mit zunehmender magnetischer Flußdichte B und mit wenigstens 1,5-facher Potenz der Speisefrequenz zu. Bei festgelegter Motorpolzahl ist für eine zu erzielende Drehzahl die Speisefrequenz festgelegt. Somit kann eine Reduzierung der Eisenverluste lediglich durch Reduzierung der magnetischen Flußdichte erzielt werden.

Bei der erfindungsgemäßen Motorausführung wird zur Begrenzung der magnetischen Flußdichte im Rotor und/oder Stator ein geeignetes Material eingesetzt, das sich durch niedrige Sättigungs-Flußdichte und geringe Eisenverluste auszeichnet und dabei ausreichende mechanische Festigkeit aufweist.

Derartige Materialien, wie beispielsweise die in den Patentansprüchen 2 und 3 aufgeführten Materialien, sind an sich bekannt. Ihr Einsatz erfolgte jedoch bisher lediglich bei Bauelementen der Nachrichtentechnik und der Leistungselektronik. Ihre Verwendung im Elektromotorenbau ist unbekannt.

Es ist vorteilhaft und ausreichend, wenn das Material mit den erfindungsgemäß vorgesehenen Eigenschaften ausschließlich zur Ausbildung des Rotors verwendet wird. Durch die Sättigung des Rotormaterials wird gleichzeitig die magnetische Flußdichte im Stator begrenzt, so daß für den Stator ein kostengünstigeres Material verwendet werden kann.

Da bei der vorgesehenen Anwendung ein nur relativ kleines Drehmoment erzielt werden muß, wobei die Leistung aus der hohen Drehzahl resultiert, hält sich die Zunahme des Motorvolumens, bedingt durch die Reduzierung der magnetischen Flußdichte, in akzeptablen Grenzen.

Günstig bezüglich der Verluste wirkt hierbei die unipolare Bestromung der Wicklungen beim geschalteten Reluktanz-Motor und die hierdurch geringere Amplitude der Flußdichte gegenüber bipolarer Bestromung.

Eine derartige Motor-Ausbildung ist abweichend vom klassischen Motordesign, bei dem üblicherweise eine hohe Ausnutzung (= Drehmoment/MotorvolumenVerhältnis) angestrebt wird.

Durch die Reduzierung der magnetischen Flußdichte ergeben sich neben der starken Reduzierung der Eisenverluste weitere Vorteile. Es werden nämlich die radial wirkenden Kräfte, die die mechanischen Schwingungen des Statorpaketes und die damit verbundene Lärmentwicklung verursachen, deutlich reduziert, so daß hauptsächlich die mechanischen Laufgeräusche maßgeblich sind.

Weiterhin kann beim Betrieb in Sättigung in bekannter Weise der Leistungsfaktor λ verbessert werden.

Es hat sich gezeigt, daß der erfindungsgemäße Einsatz eines geschalteten Reluktanz-Motors, bei dem mindestens der Rotor die angegebenen Materialeigenschaften aufweist, zu hervorragenden Ergebnissen innerhalb einer Antriebsvorrichtung für einen OE-Spinnrotor führt.

Es hat sich weiterhin als vorteilhaft erwiesen, wenn der geschaltete Reluktanz-Motor der erfindungsgemäßen Antriebsvorrichtung vier Stator- und zwei Rotorpole bei zweiphasiger Bestromung aufweist. Bei einer solchen Auslegung ist der Aufwand an Leistungselektronik bei gleichzeitig kleinen Verlusten bedingt durch die niedrigere Speisefrequenz relativ gering. Es ist allerdings dann notwendig, eine unsymmetrische Rotorausbildung zu wählen, die nur eine Drehrichtung des Motors zuläßt, um aus jeder Lage einen sicheren Anlauf zu gewährleisten. Hierbei stellt die Beschränkung auf nur eine Drehrichtung für OE-Spinnrotor-Antriebe keine Einschränkung dar.

Es hat sich weiterhin gezeigt, daß die erfindungsgemäße Antriebsvorrichtung in besonders vorteilhafter Weise einsetzbar ist für OE-Spinnrotoren, welche in Vorrichtungen zur Herstellung eines Zwirns aus mindestens zwei Garnkomponenten verwendet werden. Derartige Vorrichtungen sind beispielsweise in der älteren nicht vorveröffentlichten DE-OS 4 331 801 und DE-OS 4 331 802 beschrieben. Sie besitzen eine Zwirnspindel der lediglich aufgelöstes Fasermaterial zugeführt wird und der fertige Zwirn aus der Spindel abgezogen wird, wobei die Zwirnspindel eine im wesentlichen geschlossene Kammer umfaßt, in welcher die Gehäuse zweier OE-Spinnrotoren mit dem Spindelrotor über Drehlager verbunden und durch Halteeinrichtungen gegen Verdrehung gesichert angeordnet sind. Es hat sich gezeigt, daß die erfindungsgemäße Antriebseinrichtung wegen ihrer hohen Leistungsfähigkeit und ihres außerordentlich geringen Bedarfes an Platz für den Antriebsmotor selbst und die ansteuernden elektronischen Bauteile für diesen Anwendungszweck besonders hervorragend geeignet ist.

Im folgenden werden anhand der beigefügten Zeichnungen Ausführungsbeispiele für eine Antriebsvorrichtung nach der Erfindung näher erläutert.

In den Zeichnungen zeigen:
Figur 1 in einer teilweise geschnittenen Seitenansicht einen OE-Spinnrotor mit Antriebsvorrichtung;
Figur 1a den OE-Spinnrotor nach Figur 1 im Bereich der Antriebsvorrichtung im Querschnitt.
Figuren 2a bis 2c in Diagrammen den Verkettungsfluß Ψ in Abhängigkeit vom Erregungsstrom i zur schematischen Darstellung der Verbesserung des Leistungsfaktors λ bei Betrieb in Sättigung;
Figur 3 ein Prinzipschaltbild der Leistungselektronik zur Bestromung einer Motorphase des geschalteten Reluktanz-Motors nach Figur 1;
Figuren 3a bis 3e den zeitlichen Verlauf von Strömen bzw. Spannungen an verschiedenen Punkten der Schaltung nach Figur 3;
Figur 4 ein Prinzipschaltbild der gesamten Ansteuereinrichtung für den Motor nach Figur 1 bei gesteuertem Betrieb des Motors;
Figur 5 ein Prinzipschaltbild der gesamten Ansteuereinrichtung für den Motor nach Figur 1 bei geregeltem Betrieb des Motors;
Figur 6 in einer perspektivischen teilweise aufgerissenen und geschnittenen Darstellung eine Doppeldraht-Zwirnspindel zur Herstellung eines Zwirns aus aufgelöstem Fasermaterial, welche zwei OE-Spinnrotoren mit einer Antriebsvorrichtung nach der Erfindung aufweist.

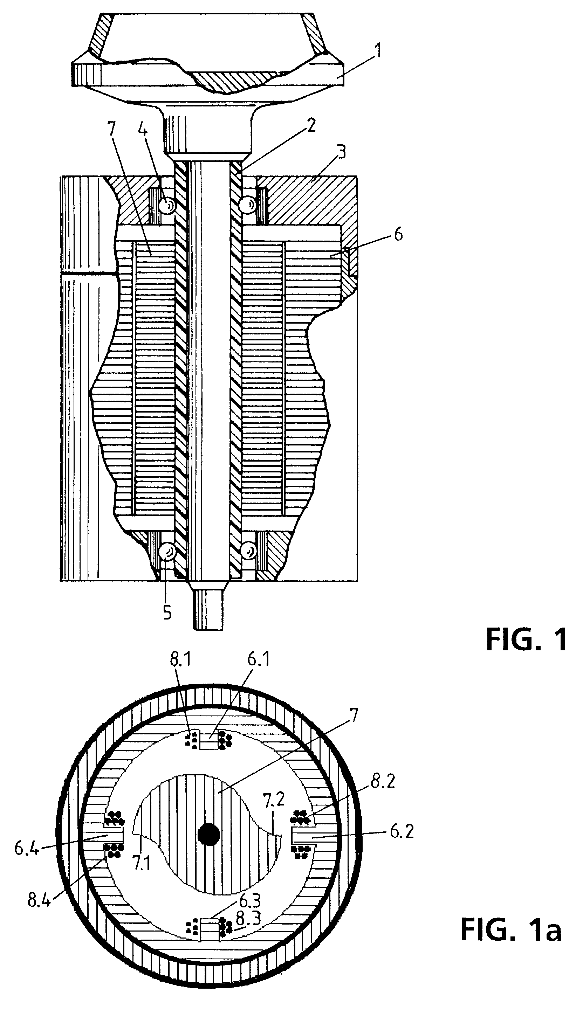

In Figur 1 ist ein OE-Spinnrotor mit Antriebsvorrichtung dargestellt. Die den Spinnrotor 1 tragende Welle 2 ist in einem Gehäuse 3 über entsprechende Lager 4 und 5 drehbar gelagert. In dem Gehäuse 3 ist der die Welle antreibende, für hohe Drehzahlen optimierte, geschaltete Reluktanz-Motor angeordnet, dessen Rotor 7 drehfest auf der Welle 2 zwischen den Lagern 4 und 5 angeordnet ist und dessen Stator 6 koaxial außerhalb des Rotors 7 fest am Gehäuse angeordnet ist.

In einer realisierten Ausführungsform ist der Rotor 7 des geschalteten Reluktanz-Motors aus Bändern mit einer Dicke von 0,03 mm aufgebaut, die aus einem amorphen Metall auf Co-Basis bestehen, welches folgende Eigenschaften aufweist:
- Curie-Temperatur 210°C
- Sättigungs-Flußdichte 0,55T
- Verluste bei 100 kHz, 0,3T: 100 W/kg
- Zugfestigkeit 1500 N/mm²
Wie aus Figur 1a ersichtlich, besitzt der Stator 6 des Motors vier Statorpole 6.1, 6.2, 6.3 und 6.4, an denen die Statorwicklungen 8.1, 8.2, 8.3 bzw. 8.4 angeordnet sind. Der Rotor 7 ist als unsymmetrischer Rotor mit zwei Rotorpolen 7.1 und 7.2 aufgebaut.

Mit einer derartigen Motorausbildung konnte bei einem 300-W-Motor bei einer Drehzahl von 66000U/min. ein elektrischer Wirkungsgrad von 93 % erzielt werden.

Selbstverständlich ist es auch möglich, als ferromagnetisches Material des Rotors 7 eine kristalline FeNi-, FeCo oder FeNiCo-Legierung mit entsprechenden Eigenschaften zu verwenden.

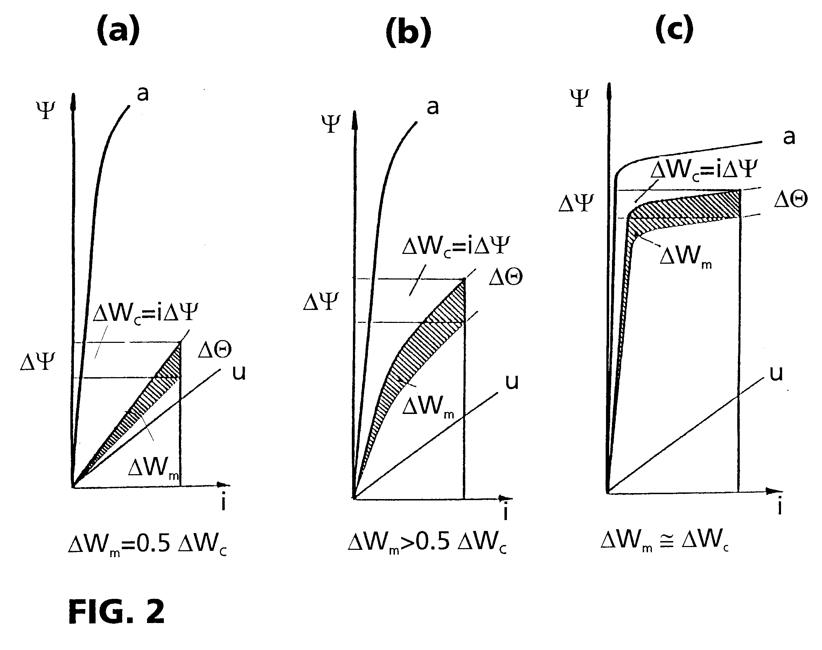

Im folgenden wird anhand von Figur 2 die Verbesserung des Leistungsfaktors λ eines geschalteten Reluktanz-Motors bei Betrieb in Sättigung beschrieben. Hierzu ist in den Figuren 2(a) bis 2(c) der Zusammenhang zwischen dem Verkettungsfluß Ψ und dem Erregungsstrom i qualitativ und idealisiert dargestellt. Gezeigt wird die Energieumwandlung des Motors von elektrischer in mechanische Energie bei einer Rotation um den Drehwinkel Δ Θ . Die Linie a kennzeichnet den maximalen Verkettungsfluß Ψ bei maximaler Deckung von Rotor- und Statorpol, während die Linie u den Verkettungsfluß Ψ bei vollständig fehlender Deckung kennzeichnet. Wie aus Figur 2(a) zu ersehen, ist bei linearem Verlauf von Verkettungsfluß Ψ und Erregungsstrom i die abgegebene mechanische Energie Δ Wₘ exakt halb so groß wie die aufzuwendende elektrische Energie Δ W_{c}. Figur 2(b) zeigt die Energieumwandlung bei üblichem Motordesign, also bei einem Arbeitspunkt im nicht linearen, jedoch noch ungesättigten Teil der Hysteresekurve. Die abgegebene mechanische Energie ist größer als die Hälfte der aufzunehmenden elektrischen Energie Δ W_{c}. Figur 2(c) zeigt schließlich die Energieumwandlung beim Betrieb in Sättigung. Die aufzuwendende elektrische Energie Δ W_{c} kann fast vollständig in mechanische Energie Δ Wₘ umgewandelt werden.

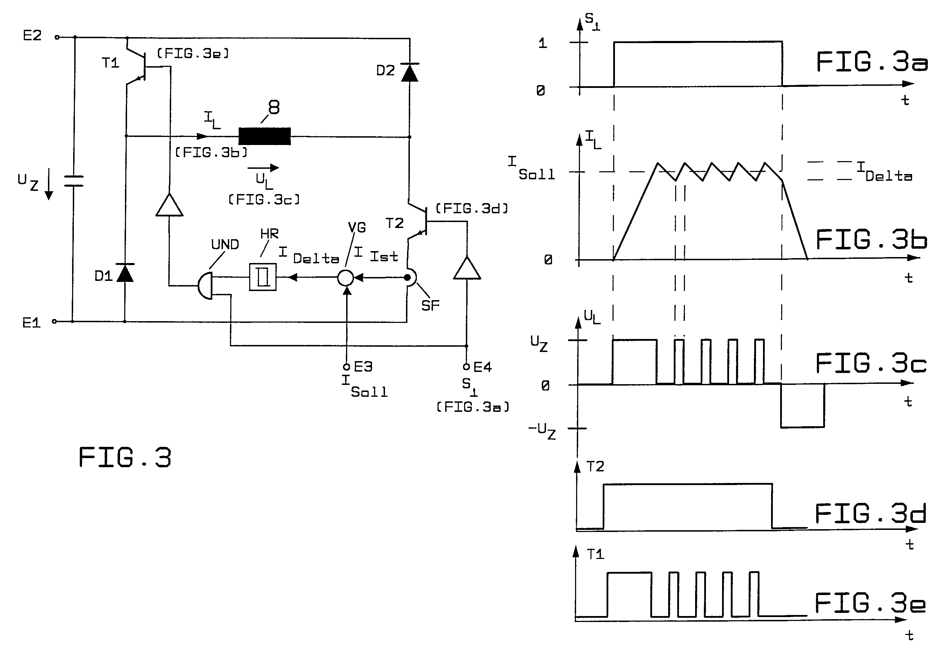

Bemerkt werden soll noch, daß die Energiedifferenz Δ W_{c}- Δ Wₘ als magnetische Energie in der Motorwicklung gespeichert ist und bei entsprechend ausgebildeter Leistungselektronik, die weiter unten anhand von Figur 3 dargestellt wird, über entsprechende Freilaufdioden in die Gleichstrom-Energieversorgung zurückgeführt wird.

Figur 3 zeigt in einem Prinzipschaltbild eine mögliche Ausführungsform der Leistungselektronik zur Bestromung des geschalteten Reluktanz-Motors, wobei lediglich die Elemente zur Bestromung einer Motorphase dargestellt sind, deren Statorwicklungen, die parallel oder in Serie geschaltet sein können, in Figur 3 allgemein mit Bezugsziffer 8 bezeichnet sind. Derartige Schaltungsausführungen sind an sich bekannt. An den Eingängen E1 und E2 der Schaltung liegt die Spannung U_{Z}, dem analogen Eingang E3 wird ein Signal Iₛₒₗₗ für den Soll-Strom zugeführt, während dem Eingang E4 ein digitales Signal Sₗ zugeführt wird. Eine Bestromung der Motorwicklung 8 erfolgt, wenn beide Transistoren T1 und T2 leiten. Der Transistor T1 wird über ein UND-Glied angesteuert, dessen einem Eingang ein von einem Hysterese-Regler HR kommendes Signal zugeführt wird, während sein anderer Eingang mit dem Eingang E4 für das digitale Signal Sₗ verbunden ist. Der Hysterese-Regler HR erhält sein Eingangssignal I_{Delta} von einem Vergleicher VG in dem das dem Eingang E3 zugeführte Signal I_{Soll} mit einem Signal Iᵢₛₜ verglichen wird, das ein Maß für den Ist-Strom darstellt, der durch den Transistor T2 fließt und mittels eines Stromfühlers SF abgefühlt wird. Der Transistor T1 wird dann in den leitenden Zustand gebracht, wenn der Ist-Strom Iᵢₛₜ den Soll-Strom Iₛₒₗₗ unterschreitet und gleichzeitig das digitale Signal Sₗ gesetzt ist. Überschreitet der Ist-Strom den vorgegebenen Soll-Strom, wird der Transistor T1 gesperrt. Der Transistor T2 wird in den leitenden Zustand gebracht, wenn das digitale Signal Sₗ durch die nicht dargestellte elektronische Kommutierungssteuerung gesetzt wird. Der zeitliche Verlauf der in der Schaltung nach Figur 3 an verschiedenen Punkten auftretenden Signal formen ist in den Figuren 3a bis 3e graphisch dargestellt, wobei an den entsprechenden Punkten der Schaltung nach Figur 3 der Hinweis auf die Figuren 3a bis 3e angegeben ist. Beim Ausschalten der Wicklungsbestromung kann ein Energieausgleich über die Dioden D1 und D2 erfolgen. Mit I_{L} ist der durch die Motorwicklung 8 fließende Strom bezeichnet, während mit U_{L} die an der Motorwicklung 8 anliegende Spannung bezeichnet ist.

Die Funktionsweise der Schaltung ist aus den Figuren 3 sowie 3a bis 3e unmittelbar abzulesen.

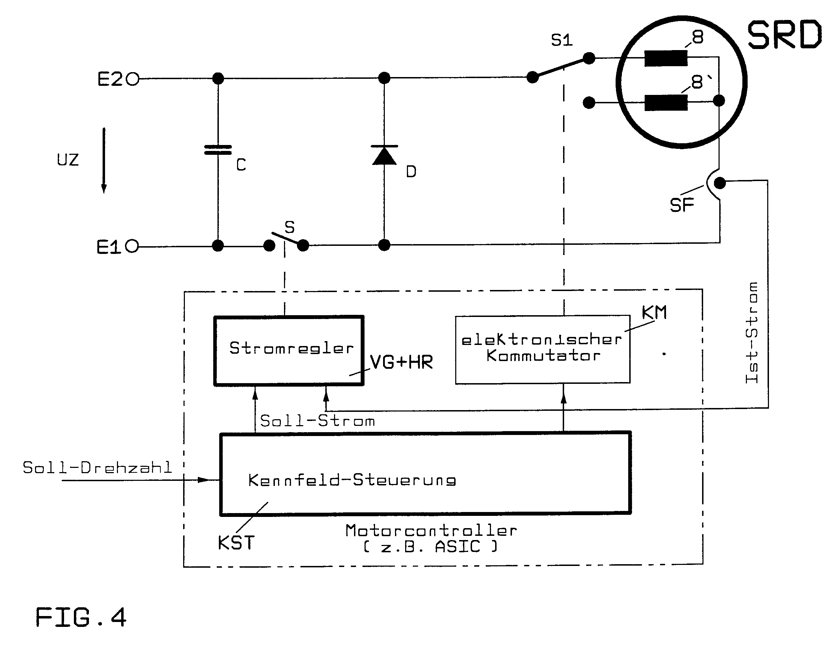

Figur 4 zeigt in schematischer Darstellung eine als "Motorcontroller" bezeichnete Steuereinrichtung für den ungeregelten Betrieb des geschalteten Reluktanz-Motors. Dabei sind die Statorwicklungen des Motors SRD wiederum für jede Motorphase mit 8 bzw. 8' symbolisiert. Die anhand von Figur 3 beschriebene Leistungselektronik ist in Figur 4 angedeutet durch den Schaltungsteil mit den Eingängen E1 und E2, den Schaltelementen C, D, den Schalter S angesteuert vom Stromregler VG-HR, der das Signal für den Ist-Strom vom Stromfühler SF und das Signal für den Soll-Strom von einer Kennfeldsteuerung KST her erhält, der die Soll-Drehzahl eingegeben wird. Der Schalter S1 deutet die Elemente zur Kommutierung der Leistungselektronik an, die von einem elektronischen Kommutator KM her angesteuert werden, der ebenfalls an die Kennfeldsteuerung KST angeschlossen ist. Bei bekannten und weitgehend konstanten Systemeigenschaften des Antriebssystems werden Kommutierungsfrequenz und zugehöriger Soll-Strom für mögliche Hoch- bzw. Tieflauf-Rampen des Antriebssystems in der Kennfeldsteuerung KST abgelegt und durch diese vorgegeben.

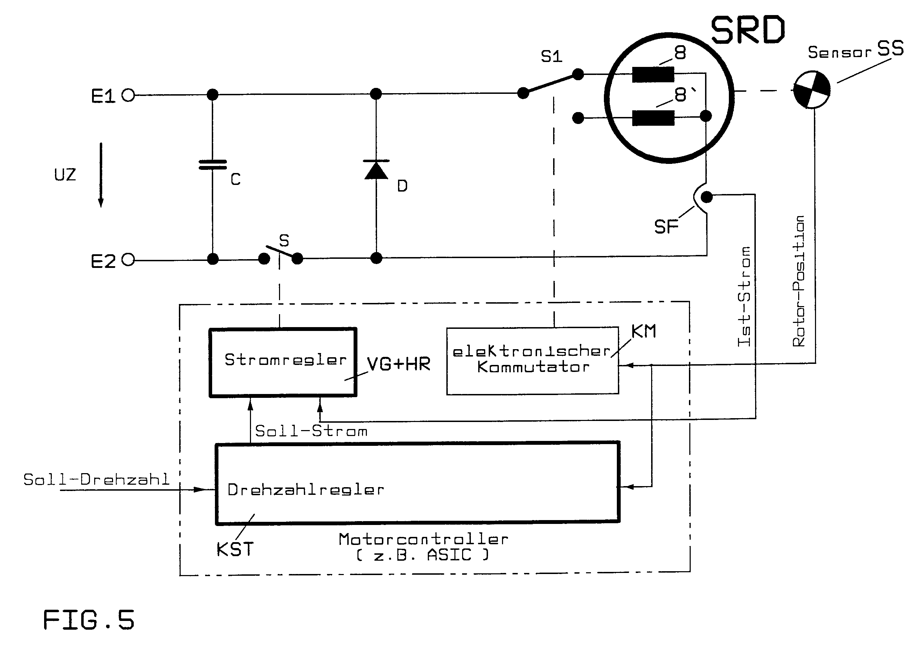

In Figur 5 ist in einer Darstellung analog Figur 4 ein entsprechender "Motorcontroller" für den geregelten Betrieb des geschalteten Reluktanz-Motors SRD schematisch dargestellt. In Figur 5 sind der Figur 4 entsprechende Bauteile mit den gleichen Bezugszeichen versehen.

Zu den anhand von Figur 4 bereits beschriebenen Bauteilen kommt ein Sensor SS zur Erfassung der Rotorposition des Motors. Die Kommutierung der Wicklungsbestromung über den Schalter S1 erfolgt somit immer positionsrichtig. Als Sensor ist ein einfacher Sensor ausreichend, der pro Motorphase einen Impuls pro Umdrehung liefert. Das Signal dieses Sensors SS kann der dem Stromregler überlagerten Drehzahlregelung gleichzeitig vorteilhaft als Ist-Drehzahl-Signal dienen.

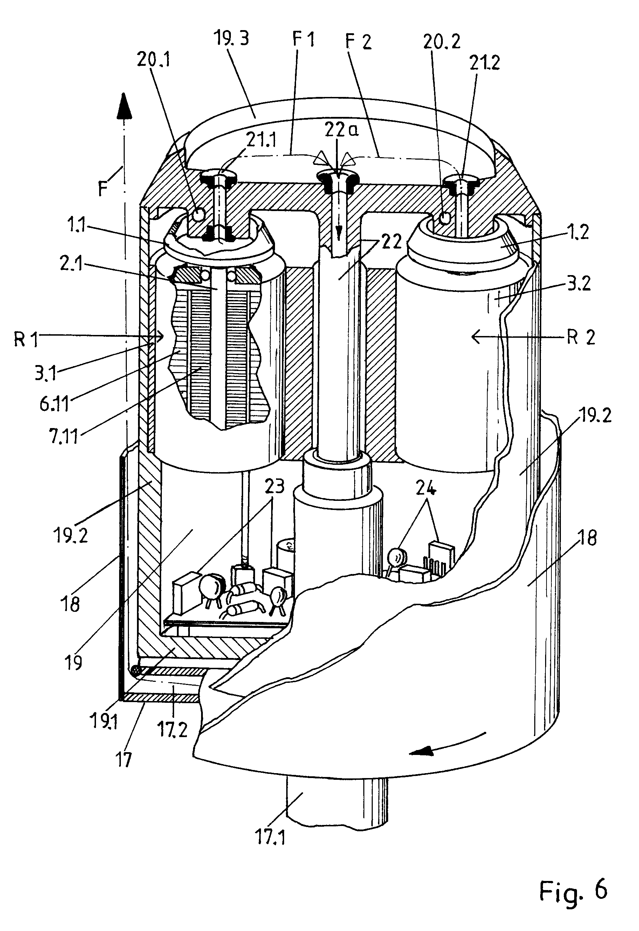

In Figur 6 ist ein Ausführungsbeispiel dargestellt, welches zeigt, in welcher Weise eine Antriebsvorrichtung für einen OE-Spinnrotor der oben beschriebenen Bauart an einer Doppeldraht-Zwirnspindel zur Herstellung eines Zwirns verwendet werden kann, wobei der Zwirnspindel lediglich aufgelöstes Fasermaterial zugeführt wird.

In Figur 6 sind nur die für die vorliegende Anwendung wesentlichen Teile einer Zwirnspindel dargestellt, die im übrigen ausführlicher in der älteren DE-OS 4 331 801 im Zusammenhang mit einer anderen Antriebsvorrichtung beschrieben ist. Die in Figur 6 dargestellte Zwirnspindel besitzt einen in einer nicht dargestellten Spindelbank drehbar gelagerten Hohlschaft 17.1, der beispielsweise mittels eines nicht dargestellten Tangentialriemenantriebs in Drehung versetzbar ist und die Spindelrotorscheibe 17 trägt, durch welche radial ein Fadenleitkanal 17.2 geführt ist. Am Außenumfang der Spindelrotorscheibe 17 ist als ein Fadenleitelement für den Faden F ein Ballonbegrenzer 18 befestigt, der an seinem oberen Ende ein nicht dargestelltes Fadenleitorgan trägt. In das nicht dargestellte innere Ende des Fadenleitkanals 17.2 mündet als ein Teil der Spindelhohlachse ein Fadenführungsrohr ein. Auf dem oberen Ende des Hohlschaftes 17.1 ist unter Zwischenschaltung von Drehlagern eine im wesentlichen geschlossene, gegen Drehung gesicherte Kammer 19 gelagert, die vorzugsweise die Form eines Zylinders hat und einen Boden 19.1, eine Außenwand 19.2 und einen abnehmbaren Deckel 19.3 umfaßt. Innerhalb dieser Kammer 19 sind zwei Rotor-Spinnvorrichtungen R1 und R2 untergebracht, deren Spinnrotoren 1.1 und 1.2 von einer Welle getragen sind, die bei der Rotor-Spinnvorrichtung R1 mit 2.1 bezeichnet ist. Innerhalb der Gehäuse 3.1 bzw. 3.2 der Rotor-Spinnvorrichtungen R1 und R2 ist jeweils ein geschalteter Reluktanz-Motor angeordnet, der bei der Vorrichtung R1 einen mit dem Gehäuse verbundenen Stator 6.11 sowie einen mit der Welle 2.1 drehfest verbundenen Rotor 7.11 aufweist. Im Gehäuse 3.2 ist ein analog aufgebauter geschalteter Reluktanz-Motor angeordnet. Die Rotoren der beiden geschalteten Reluktanz-Motoren können in der bereits beschriebenen Weise ausgestaltet sein.

Durch den Deckel 19.3 der Kammer 19 münden Fasermaterialeinspeisungskanäle 20.1 bzw. 20.2 in die Spinnrotoren 1.1 und 1.2. Weiterhin sind durch den Deckel 19.3 koaxial oberhalb der Spinnrotorachsen verlaufende Fadenabzugsrohre 21.1 und 21.2 geführt, durch die die in den Spinnrotoren 1.1 und 1.2 hergestellten Spinnfäden F1 bzw. F2 abgezogen werden, bevor sie durch das obere Einlaufende 22a der nach unten gerichteten Spindelhohlachse 22 einlaufen und in nicht dargestellter Weise schließlich in das innerhalb des Hohlschaftes 17.1 angeordnete Fadenführungsrohr gelangen und durch den Fadenleitkanal 17.2 dem Fadenballon zugeführt werden und als Zwirn F in nicht dargestellter Weise nach oben abgezogen werden. Die zur Ansteuerung der Antriebsvorrichtungen für die beiden Rotor-Spinnvorrichtungen R1 und R2 nötigen elektronischen Bauelemente 23 bzw. 24 sind im unteren Teil der Kammer 19 angeordnet.

## Patentansprüche

1. Antriebsvorrichtung für ein mit hoher Drehzahl rotierendes Bauteil, insbesondere für einen OE-Spinnrotor, mit einer das Bauteil tragenden, in einem Gehäuse drehbar gelagerten Welle, auf welcher der Rotor eines Reluktanz-Motors drehfest angeordnet ist, dessen Stator koaxial außerhalb des Rotors fest am Gehäuse angeordnet ist,
dadurch gekennzeichnet, daß der Reluktanz-Motor als geschalteter Reluktanz-Motor ausgebildet ist, bei welchem mindestens der Rotor (7) aus einem ferromagnetischen Material mit einer Curie-Temperatur von mindestens 210°C, einer Sättigungs-Flußdichte von höchstens 0,8T, Verlusten bei 100 KHZ und 0,3T von höchstens 150 W/kg und einer Zugfestigkeit von mindestens 400N/mm² aufgebaut ist.

2. Antriebsvorrichtung nach Anspruch 1, dadurch gekennzeichnet, daß das ferromagnetische Material des Rotors (7) ein amorphes Metall ist.

3. Antriebsvorrichtung nach Anspruch 1, dadurch gekennzeichnet, daß das ferromagnetische Material des Rotors (7) eine kristalline FeNi-, FeCo- oder FeNiCo-Legierung ist.

4. Antriebsvorrichtung nach einem der Ansprüche 1 bis 3, gekennzeichnet durch eine Auslegung des geschalteten Reluktanz-Motors derart, daß mindestens der Rotor (7) in magnetischer Sättigung betrieben werden kann.

5. Antriebsvorrichtung nach einem der Ansprüche 1 bis 4, dadurch gekennzeichnet, daß der geschaltete Reluktanz-Motor vier Statorpole (6.1 - 6.4) und zwei Rotorpole (7.1, 7.2) bei zweiphasiger Bestromung aufweist.

6. Antriebsvorrichtung nach Anspruch 5, dadurch gekennzeichnet, daß der Rotor (7) als unsymmetrischer Rotor aufgebaut ist.

7. Anwendung einer Antriebsvorrichtung nach einem der Ansprüche 1 bis 6 an einer Vorrichtung zur Herstellung eines Zwirns aus mindestens zwei Garnkomponenten mit einer Zwirnspindel, der lediglich aufgelöstes Fasermaterial zugeführt wird und der fertige Zwirn aus der Spindel abgezogen wird, wobei die Zwirnspindel eine im wesentlichen geschlossene Kammer (19) umfaßt, in welcher die Gehäuse (3.1, 3.2) zweier OE-Spinnrotoren (R1, R2) mit Antriebsvorrichtung nach einem der Ansprüche 1 bis 6 mit dem Spindelrotor (17.1) über Drehlager verbunden und durch Halteeinrichtungen gegen Verdrehung gesichert angeordnet sind.
